# EUROPÄISCHE PATENTSCHRIFT

(11) **EP 1 851 085 B1**
(45) Veröffentlichungstag und Bekanntmachung des Hinweises auf die Patenterteilung: **23.12.2015**
(21) Anmeldenummer: 06708191.9
(22) Anmeldetag: 10.02.2006
(51) Int. Cl.: B60N 2/36, B60N 2/44

(54) **Vorrichtung zur Verriegelung und Entriegelung und Kraftfahrzeugsitz mit einer solchen Vorrichtung**
Device for locking and unlocking and automotive vehicle seat with such a device
Dispositif pour verrouiller et déverrouiller et siège de véhicule automobile avec un tel dispositif

(30) Priorität: 11.02.2005 DE 102005006565
(43) Veröffentlichungstag der Anmeldung: 07.11.2007
(60) Teilanmeldung: 11002091.4
(73) Patentinhaber: Johnson Controls GmbH, 51399 Burscheid (DE)
(72) Erfinder: WILLING, Thomas, 50825 Köln (DE); HAIDA, Stefan, 42855 Remscheid (DE); PASTOORS, Alfred, 50823 Köln (DE)
(74) Vertreter: Wolff, Felix
(86) Internationale Anmeldenummer: PCT/EP2006/050849
(87) Internationale Veröffentlichungsnummer: WO 2006/084898

(56) Entgegenhaltungen:
- EP-A- 0 839 685
- EP-A- 1 160 121
- EP-A- 1 505 230
- WO-A-01/23207
- DE-A1- 4 405 346
- DE-A1- 4 405 698
- DE-A1- 10 058 044
- DE-A1- 10 142 486
- DE-A1- 10 310 848
- DE-U1- 29 811 388
- US-A- 4 721 338
- US-A- 5 547 242
- US-A- 5 855 414
- PATENT ABSTRACTS OF JAPAN Bd. 008, Nr. 061 (M-284), 23. März 1984 (1984-03-23) -& JP 58 211925 A (NISSAN JIDOSHA KK), 9. Dezember 1983 (1983-12-09)

## Beschreibung

Die vorliegende Erfindung betrifft eine Vorrichtung zur Verriegelung und Entriegelung eines Verriegelungsbolzens einer Komponente, insbesondere einer Lehne eines Kraftfahrzeugsitzes, mit einem Verriegelungshaken und einem Betätigungsbauteil, wobei der Verriegelungshaken in einer die Verriegelung sichernden Verriegelungsposition kraft- und/oder formschlüssig mit dem Verriegelungsbolzen zusammenwirkt und durch Drehen des Betätigungsbauteils in eine die Verriegelung nicht sichernde Entriegelungsposition drehbar ist, wobei die Vorrichtung eine Verriegelungsklinke aufweist, die von einer Freigabeposition in eine Sicherungsposition reversibel verstellbar ist, und die in ihrer Sicherungsposition den Verriegelungshaken in seiner Verriegelungsposition sichert und einen Kraftfahrzeugsitz mit einer solchen Vorrichtung.

Moderne Sitzanlagen in Fahrzeugen, insbesondere in Kraftfahrzeugen, sollten gute Komforteigenschaften und eine hohe Flexibilität aufweisen, beispielsweise bezüglich der Möglichkeit, das zur Verfügung stehende Ladevolumen mit wenigen Handgriffen und daher sehr einfach zu vergrößern, indem die Sitzanlage zusammengeklappt wird. Dabei muss für den Endkunden, nach ebenso einfach durchführbarer Wiederherstellung des Ausgangszustandes der Sitzanlage, immer eine sicher verriegelte Sitzanlage gewährleistet sein, damit im Falle eines Unfalles die auftretenden Crashlasten über die Sitz-Verriegelungen aufgenommen werden können. Vorrichtungen nach dem Oberbegriff des Anspruchs 1 sind z.B. aus EP 0839 685 A1, DE 298 11 388 U1, DE 101 42 486 A1 bekannt.

Aufgabe der Erfindung ist, eine einfach bedienbare Vorrichtung zur Verriegelung und Entriegelung, insbesondere der Lehne eines Sitzes, insbesondere eines Kraftfahrzeugs, zu schaffen, die eine für den Nutzer größere Sicherheit aufweist, insbesondere bei einem Crash, die konstante Verriegelungskräfte über alle Temperaturbereiche gewährleistet, bei der Toleranzen, insbesondere Bauteil- und Fertigungstoleranzen, ausgeglichen werden, und die ein minimales Spiel aufweist und daher geräuscharm ist.

Die Aufgabe wird gelöst mit einer Vorrichtung gemäß Patentanspruch 1. Bevorzugte Ausführungsformen sind den Unteransprüchen 2, 3 zu entnehmen.

Bevorzugt ist der Verriegelungshaken durch die Kraft eines Kraftmittels von der Verriegelungsposition reversibel in die Entriegelungsposition drehbar, so dass die Verriegelungsposition mittels der Kraft des Kraftmittels gehalten wird.

Das Kraftmittel ist besonders bevorzugt eine Feder, mittels der der Verriegelungshaken mit dem Betätigungsbauteil gekoppelt ist.

Erfindungsgemäß weist die Vorrichtung eine Verriegelungsklinke auf, die von einer Freigabeposition in eine Sicherungsposition reversibel verstellbar ist, und die in ihrer Sicherungsposition den Verriegelungshaken in seiner Verriegelungsposition sichert, insbesondere bei einem Crash. Die Verriegelungsklinke ermöglicht einen optimalen Kraftfluss und daher eine große Lastaufnahmefähigkeit der erfindungsgemäßen Vorrichtung.

Erfindungsgemäß umfasst das Betätigungsbauteil ein Verstellmittel, welches beim Betätigen erst nach einer Drehung um einen Sicherheitswinkel mit der Verriegelungsklinke zusammenwirkt, so dass eine ungewollte Auslenkung des Betätigungsbauteils durch starke Beschleunigungskräfte, beispielsweise durch Erschütterungen oder bei einem Unfall, nicht zum Verstellen der Verriegelungsklinke in die Freigabeposition führt. Das Betätigungsbauteil ist massenausgeglichen und ebenfalls bevorzugt im Wesentlichen scheibenförmig ausgebildet. Beispielsweise verläuft die Drehachse, um die das Betätigungsbauteil betätigt wird, durch ihren Schwerpunkt. Dadurch ist das Betätigungsbauteil besonders unempfindlich gegenüber Querkraftbeschleunigungen.

Das Drehen des Verriegelungshakens von der Entriegelungsposition in die Verriegelungsposition ist unabhängig vom Verstellen der Verriegelungsklinke von der Freigabeposition in die Sicherungsposition möglich, insbesondere da der Verriegelungshaken und die Verriegelungsklinke nicht miteinander gekoppelt sind, beispielsweise durch eine Feder. In diesem Fall ist der Verriegelungshaken jedoch nicht in der Verriegelungsposition verriegelt.

Bevorzugt umfasst die Vorrichtung ein Schiebeelement, mittels dem das Spiel zwischen dem Verriegelungsbolzen und dem Verriegelungshaken in der Verriegelungsposition reduzierbar ist. Dadurch klappert die Vorrichtung insbesondere bei Fahrt über unebenes Gelände nicht. Außerdem ermöglicht das Schiebeelement ein für den Nutzer einfaches und gleichmäßiges Verriegeln der Vorrichtung.

Vorzugsweise umfasst das Schiebeelement ein zweites Kraftmittel, mittels dessen Kraft es in der Verriegelungsposition des Verriegelungshakens mit dem Verriegelungsbolzen zusammenwirkt, wobei die Kraft des zweiten Kraftmittels im wesentlichen unabhängig von der Umgebungstemperatur ist. Das Verriegeln ist daher auch bei extremen Temperaturen im wesentlichen gleichbleibend gleichmäßig möglich.

Ein weiterer Gegenstand der vorliegenden Erfindung ist ein Kraftfahrzeugsitz mit einer solchen Vorrichtung.

Die erfindungsgemäße Vorrichtung gewährleistet eine über alle Temperaturbereiche gleichbleibend gleichmäßige Verriegelung, ist sehr leicht und leise bedienbar und klappert auch während der Fahrt nicht.

Im folgenden wird die Erfindung anhand von **Figuren** beschrieben. Die **Figuren** sind lediglich beispielhaft und grenzen den allgemeinen Erfindungsgedanken nicht ein.
- **Figur 1**: zeigt eine Ausführungsform einer erfindungsgemäßen Vorrichtung mit einem Verriegelungshaken.
- **Figur 2**: zeigt einen Schnitt durch die Vorrichtung in der Ausführungsform der **Figur 1****.**
- **Figur 3**: zeigt eine Seitenansicht einer erfindungsgemäßen Vorrichtung mit einem Schiebeelement.
- **Figur 4**: zeigt eine weitere Ausführungsform eines Schiebeelementes einer erfindungsgemäßen Vorrichtung.
- **Figur 5**: zeigt einen Ausschnitt aus einer erfindungsgemäßen Vorrichtung, wobei sich der Verriegelungshaken in der Verriegelungsposition befindet.
- **Figur 6**: zeigt den ummantelten Verriegelungshaken mit einer Prägung in einem Kontaktbereich des Verriegelungshakens mit dem Verriegelungsbolzen.
- **Figur 7**: zeigt die Ausführung der erfindungsgemäßen Vorrichtung der **Figur 1** mit einem Signalmittel.
- **Figur 8**: zeigt einen Anwendungsfall einer nicht erfindungsgemäßen Vorrichtung mit einem Signalmittel 7.

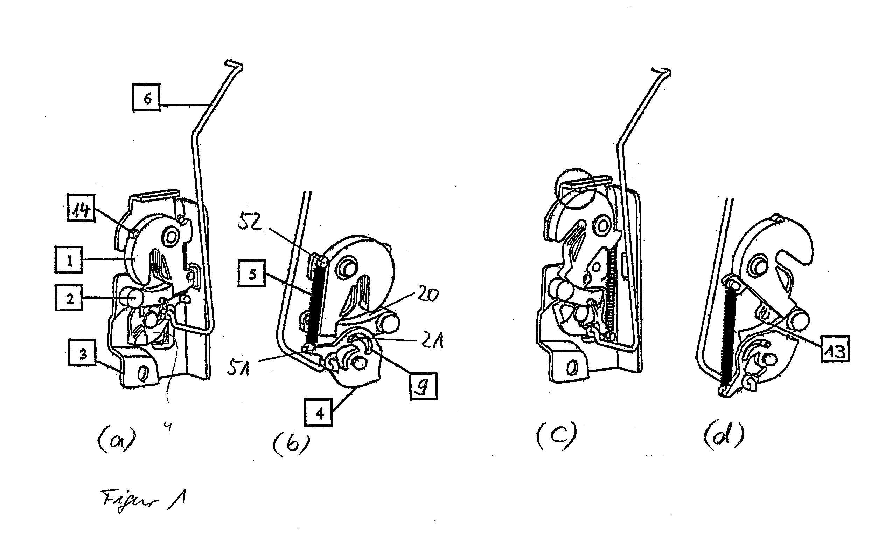

**Figur 1** zeigt eine Ausführungsform einer erfindungsgemäßen Vorrichtung mit einem Verriegelungshaken 1. In den Darstellungen **a** und **b** befindet sich der Verriegelungshaken 1 in der Verriegelungsposition V, während er sich in den Darstellungen **c** und **d** in der Entriegelungsposition E befindet. In der Verriegelungsposition V wirkt der Verriegelungshaken 1 mit der Verriegelungsklinke 2 form- und/oder kraftschlüssig zusammen, so dass der Verriegelungshaken 1 in dieser Verriegelungsposition V gesichert ist. Ein Betätigungsbauteil 4 wird durch Betätigen eines Betätigungsmittels 6 gedreht. Das Betätigungsbauteil 4 weist ein Verstellmittel 9, hier eine Kulisse, auf, die mit der Verriegelungsklinke 2 zusammenwirkt, hier mittels einem Nocken 21, wodurch die Verriegelungsklinke 2 von einer Sicherungsposition S in der der Verriegelungshaken 1 durch die Verriegelungsklinke 2 in der Verriegelungsposition V gesichert ist, in eine Freigabeposition F gedreht wird, in der der Verriegelungshaken 1 nicht mehr durch die Verriegelungsklinke 2 in der Verriegelungsposition V gesichert ist. Im Folgenden werden die Begriffe Verstellmittel 9 und Kulisse synonym verwendet. Mittels der Kraft eines Kraftmittels 5, hier einer (Zug-) Feder, dessen erstes Ende 51 am Betätigungsbauteil 4 vorgesehen ist, und dessen zweites Ende 52 am Verriegelungshaken 1 vorgesehen ist, kann der Verriegelungshaken 1 entlang der Kontur 20 der Verriegelungsklinke 2 in die Entriegelungsposition E gezogen werden. Im Folgenden werden die Begriffe Kraftmittel 5 und Feder synonym verwendet. Der Verriegelungshaken 1, die Verriegelungsklinke 2 sowie das Betätigungsbauteil 4 sind drehbar an einer Grundplatte 3 angeordnet. In der Entriegelungsposition E liegt der Verriegelungshaken 1 mit einem zweiten Anschlag 14 an der Grundplatte 3 an. Außerdem weist der Verriegelungshaken 1 einen ersten Anschlag 13 auf, mit dem er in der Verriegelungsposition V gegebenenfalls zeitweise an der Grundplatte 3 anliegt.

Die dargestellte Anordnung von Verriegelungshaken 1 und Verriegelungsklinke 2 ermöglicht einen sehr guten Kraftfluss und daher eine hohe Lastaufnahme, insbesondere bei einem Crash, wobei gleichzeitig ein sehr guter Toleranzausgleich im Bereich von ca. +/-3mm - +/- 7mm möglich ist. Sie ist bezüglich ihres Crashverhaltens sehr robust, insbesondere hinsichtlich multidirektionaler Beschleunigungen.

Die Masse des Betätigungsbauteils 4 ist ausgeglichen verteilt und das Betätigungsbauteil ist im Wesentlichen scheibenförmig, so dass das Betätigungsbauteil 4 unempfindlich gegenüber Querkraftbeschleunigungen ist. Darüber hinaus ist das Betätigungsbauteil 4 auf die Verriegelungsklinke 2 so abgestimmt, dass das Betätigungsbauteil 4 die Verriegelungsklinke 2 mittels der Kulisse 9 erst nach Drehen um einen Sicherheitswinkel, der bevorzugt **2° - 15°** beträgt, freigibt, so dass die Verriegelungsklinke 2 in die Freigabeposition gedreht wird. Daher ist sichergestellt, dass ein ausreichender Leerhub vorhanden ist, so dass die Verriegelungsklinke 2 den Verriegelungshaken 1 nicht ungewollt, beispielsweise aufgrund einer großen Belastung, insbesondere bei einem Crash, freigibt. Das massenausgeglichene, scheibenförmige Betätigungsbauteil 4 ist unempfindlich gegenüber multidirektionalen Beschleunigungen und gewährleistet daher eine sehr sichere Verriegelung des Verriegelungshakens 1 in der Verriegelungsposition V.

Aufgrund der Drehung des Betätigungsbauteils 4 wird die leicht vorgespannte Feder 5 weiter gespannt und zieht den Verriegelungshaken 1, nach dem die Verriegelungsklinke 2 in die Freigabeposition F verstellt wurde, entlang der Kontur 20 der Verriegelungsklinke 2 in die Entriegelungsposition E. Die korrespondierende Kontur des Verriegelungshakens 1 ist mit der Kontur 20 der Verriegelungsklinke 2 so abgestimmt, dass die Verriegelungsklinke 2 ihre Freigabeposition F in der Entriegelungsposition E des Verriegelungshakens 1 beibehält, wenn der Verriegelungshaken 1 von der Entriegelungsposition E in die Verriegelungsposition V gedreht wird.

Die Feder 5 koppelt den Verriegelungshaken 1 mit dem Betätigungsbauteil 4. Die Verriegelungsklinke ist dagegen nicht federbelastet. Das Drehen des Verriegelungshakens 1 von der Entriegelungsposition E in die Verriegelungsposition V ist so unabhängig von dem Sichern des Verriegelungshakens 1 mittels der Verriegelungsklinke 2, also unabhängig vom Drehen der Verriegelungsklinke 2 von der Freigabeposition F in die Sicherungsposition S, und daher auch unabhängig von dem Drehen des Betätigungsbauteils 4 möglich. Der Verriegelungshaken bleibt dann jedoch ungesichert.

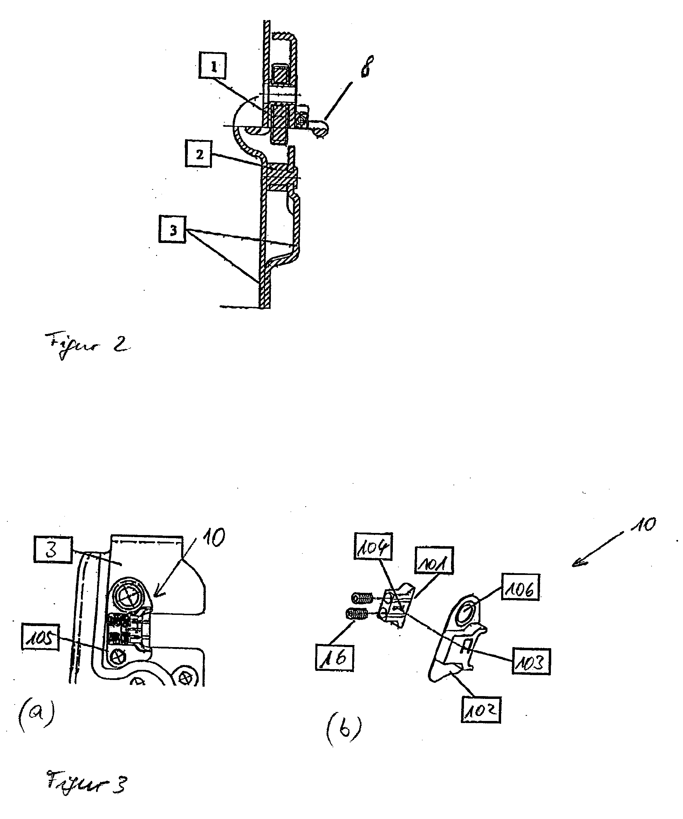

**Figur 2** zeigt einen Schnitt durch die Vorrichtung in der Ausführungsform der **Figur 1****.** Die Vorrichtung ist bezüglich ihrer Breite, die mittels dem Pfeil 15 angedeutet ist, sehr kompakt. Die Abstützwirkung gegen Verdrehen des Verriegelungshakens 1 und der Verriegelungsklinke 2 ist sehr groß, insbesondere bei einem Crash, da der Verriegelungshaken 1 und die Verriegelungsklinke 2 nahe der Grundplatte 3 angeordnet sind.

**Figur 3** zeigt eine Seitenansicht einer erfindungsgemäßen Vorrichtung mit einem Schiebeelement 10. Das Schiebeelement 10 ist zumindest teilweise aus einem Kunststoff gefertigt und mittels einem zweiten Kraftmittel 16 federbelastet. Mittels dem Schiebeelement 10 wird das Spiel zwischen dem in der Verriegelungsposition V befindlichen Verriegelungshaken 1 und dem Verriegelungsbolzen 8 reduziert, so dass die Vorrichtung sehr geräuscharm ist und nicht klappert.

Als zweites Kraftmittel 16 wird eine Stahlfeder verwendet, da die Kraft einer Stahlfeder im Vergleich zu herkömmlich verwendeten Gummielementen im wesentlichen unabhängig von der Umgebungstemperatur ist. Um eine unangenehme Geräuschentwicklung, insbesondere durch Reibung von Stahl gegeneinander, zu vermeiden, ist das Schiebeelement 10 zumindest im Bereich des Verriegelungsbolzens 8 aus einem Kunststoff gefertigt. Der Federweg des zweiten Kraftmittels ist sehr klein und beträgt ca. 1 - 5mm, vorzugsweise ca. 3mm. Daher erfolgt die Verriegelung sehr gleichmäßig und für den Nutzer sehr einfach durchführbar.

Die Ausführungsform des Schiebeelementes 10 der **Figuren 3a** **- b** weist zwei parallel zueinander angeordnete und daher parallel geschaltete zweite Kraftmittel 16, hier Druckfedern, auf. Im Folgenden werden daher die Begriffe zweites Kraftmittel 16 und Druckfeder synonym verwendet. Das Schiebeelement 10 weist ein Aufnahmebauteil 101 zumindest teilweise aus Kunststoff 101 auf, in dem die Druckfedern 16 angeordnet sind. Das Aufnahmebauteil 101 ist an einem Halteblech 102 angeordnet, das baufest an der Grundplatte 3 vorgesehen ist, und wird entlang dem Halteblech 102 in einem Wirkbereich sehr gleichmäßig geführt, der in etwa dem vierfachen Bolzendurchmesser des Verriegelungsbolzens beträgt. Das Halteblech weist einen Vorsprung 103 auf, der bevorzugt angekantet ist, und der mit einer Ausnehmung 104 des Aufnahmebauteils 101 zusammenwirkt und das Aufnahmebauteil 101 in einer vorgespannten, geräuscharmen Position hält. Außerdem sichert der Vorsprung 103 das Aufnahmebauteil 101 in der Entriegelungsposition E des Verriegelungshakens 1 gegen Herausfallen aus dem Halteblech 102.

Das Halteblech 102 wird mit den Druckfedern und dem Aufnahmebauteil 101 beispielsweise über eine Verbindungsprägung 105 an der Grundplatte 3 vormontiert und anschließend bevorzugt in einem Befestigungspunkt 106, insbesondere an der Sitzstruktur, fixiert.

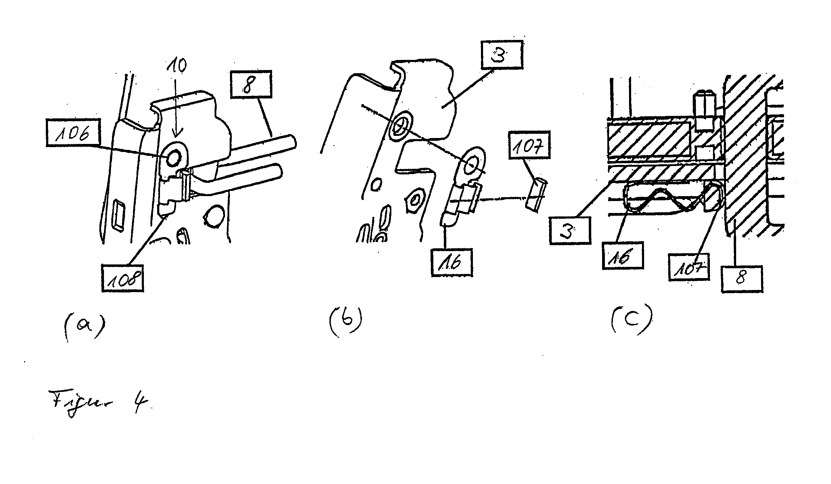

**Figur 4** zeigt eine weitere Ausführungsform eines Schiebeelementes 10 einer erfindungsgemäßen Vorrichtung. Das Schiebeelement 10 weist anstelle der Druckfeder der **Figuren 3a** **- b** ein gewelltes Federblech 16 als zweites Kraftmittel auf, welches über Klemmlaschen 108 an der Grundplatte 3 der Vorrichtung fixiert ist. Im Folgenden werden daher die Begriffe zweites Kraftmittel 16 und Federblech synonym verwendet. Das Schiebeelement 10 weist ein Kunststoffbauteil 107 im Bereich zwischen dem Federblech 16 und dem Verriegelungsbolzen 8 auf, um Geräusche durch Reibung des Federbleches 16 gegen den Verriegelungsbolzen 8 zu unterbinden. Aufgrund der robusten Bauweise wird ein gleichmäßiges Eindrücken des Federbleches 16 gewährleistet, wobei wiederum ein Wirkbereich von etwa dem vierfachen des Bolzendurchmesser des Verriegelungsbolzens 8 vorgesehen ist. Die Fixierung erfolgt mittels dem Befestigungspunkt 106, insbesondere an der Sitzstruktur.

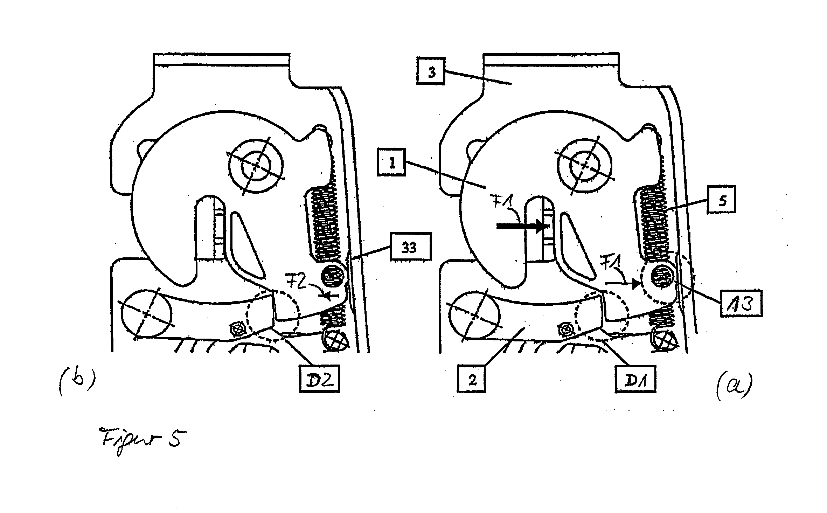

**Figur 5** zeigt einen Ausschnitt aus einer erfindungsgemäßen Vorrichtung, wobei sich der Verriegelungshaken 1 in der Verriegelungsposition V befindet. Der Verriegelungshaken 1 ist ummantelt, wobei die Ummantelung bevorzugt aus Kunststoff ist. Während des Verriegelns, d. h. während des Drehens des Verriegelungshakens 1 von der Entriegelungsposition E in die Verriegelungsposition V, wirkt der Verriegelungsbolzen 8 mit dem Verriegelungshaken 1 zumindest zeitweise zusammen, und der erste Anschlag 13 des Verriegelungshakens 1 wirkt mit einem Endanschlag 33 der Grundplatte 3 zumindest zeitweise zusammen. Der Verriegelungshaken 1 sowie der Endanschlag 33 weisen eine Prägung 130 in den Kontaktbereichen des Verriegelungshakens 1 mit dem Verriegelungsbolzen 8 bzw. des ersten Anschlags 13 mit dem Endanschlag 33 auf. Dabei wird der Verriegelungshaken 1 jeweils aufgrund der auf ihn während des Verriegelns wirkenden Kräfte, die mittels einem Pfeil F1 angedeutet sind, in diesen Kontaktbereichen verformt. Die Verformung erflogt elastisch, und zwar einerseits aufgrund der Form des Verriegelungshakens 1 bzw. des ersten Anschlags 13 des Verriegelungshakens 1 und andererseits aufgrund der Elastizität des Kunststoffes. Die rückwirkende Verformungskraft ist hier mittels einem Pfeil F2 angedeutet.

Aufgrund des größeren Spaltmaßes D1 während der Wirkung der Kraft F1 ist einerseits das Drehen der Verriegelungsklinke 2 von der Freigabeposition F in die Sicherungsposition S leicht und sicher möglich. Andererseits ist aufgrund der rückwirkenden Verformungskraft F2 in der Verriegelungsposition V des Verriegelungshakens 1 das Spaltmaß D2 zwischen der Verriegelungsklinke 2 und dem Verriegelungshaken 1 sehr klein, wodurch Klappergeräusche vermieden werden.

Das Spaltmaß D2 wird in der Verriegelungsposition V außerdem durch die Wirkung des ersten Kraftmittels 5 verringert, oder ist sogar nicht mehr vorhanden.

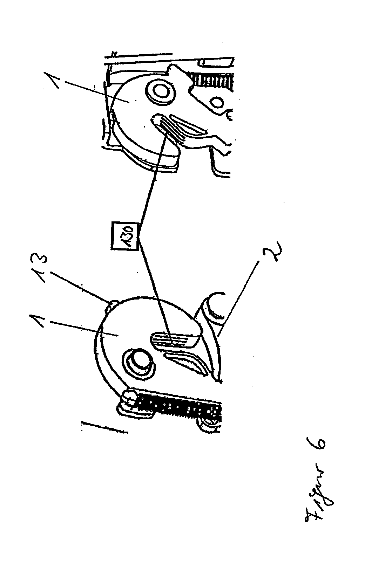

**Figur 6** zeigt die Prägung 130 der Ummantelung des Verriegelungshakens 1 im Kontaktbereich des Verriegelungshakens 1 mit dem Verriegelungsbolzen 8. Der Verriegelungshaken 1 weist ein Hakenmaul 17 auf, das beidseitig mit der Prägung 130 versehen ist. Durch die Prägung 130 ist das Spiel zwischen dem Verriegelungshaken 1 und dem Verriegelungsbolzen 8 minimiert.

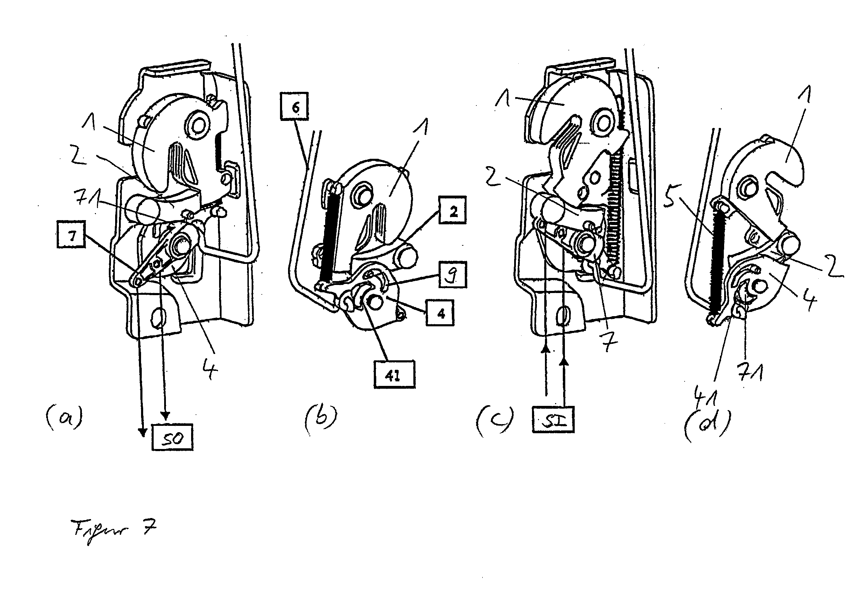

**Figur 7** zeigt die Ausführung der erfindungsgemäßen Vorrichtung der **Figur 1** mit einem Signalmittel 7. Das Signalmittel 7 ermöglicht das Abgeben und/oder Entgegennehmen von mechanischen Signalen SO, SI wie beispielsweise Positions-, Belegungs- oder Verriegelungszustände.

Das Signalmittel 7 ist parallel zum Betätigungsbauteil 4 angeordnet und diesem daher parallel geschaltet. Es ist optional und kann daher nachgerüstet werden. Das Signalmittel 7 wirkt mit dem Betätigungsbauteil 4 zusammen, indem eine Anformung 71 des Signalmittels 7 in eine Ausnehmung 41 des Betätigungsbauteils 4 eingreift.

Ein mechanisches, positives oder negatives Signal SO, SI kann beispielsweise mittels einem oder mehreren Bowdenkabeln, flexiblen oder biegesteifen Drähten, Stangen oder Microschaltern, die an dem Signalmittel 7 angeordnet sind, an die Vorrichtung abgegeben oder entgegen genommen werden.

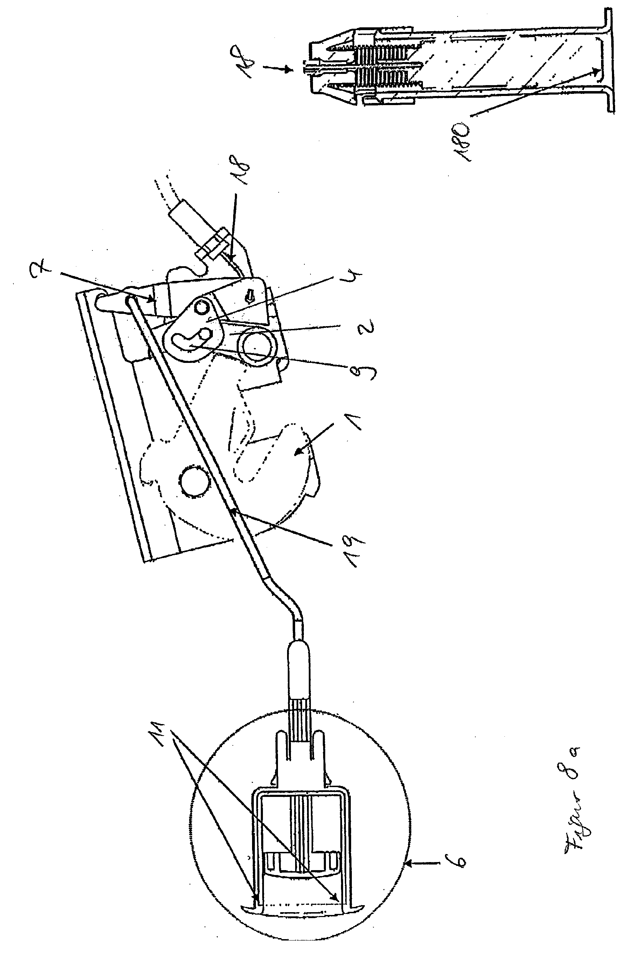

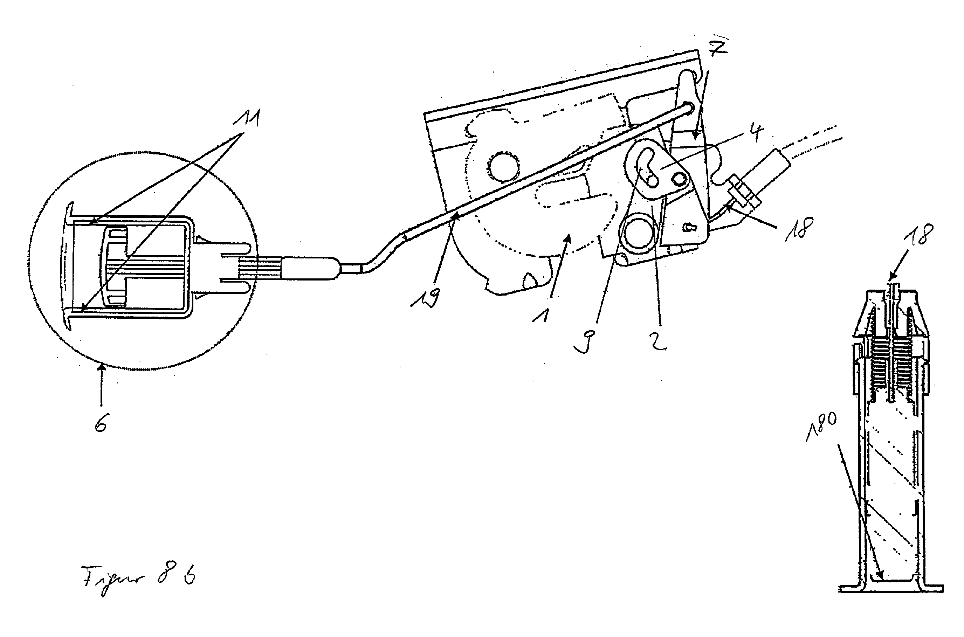

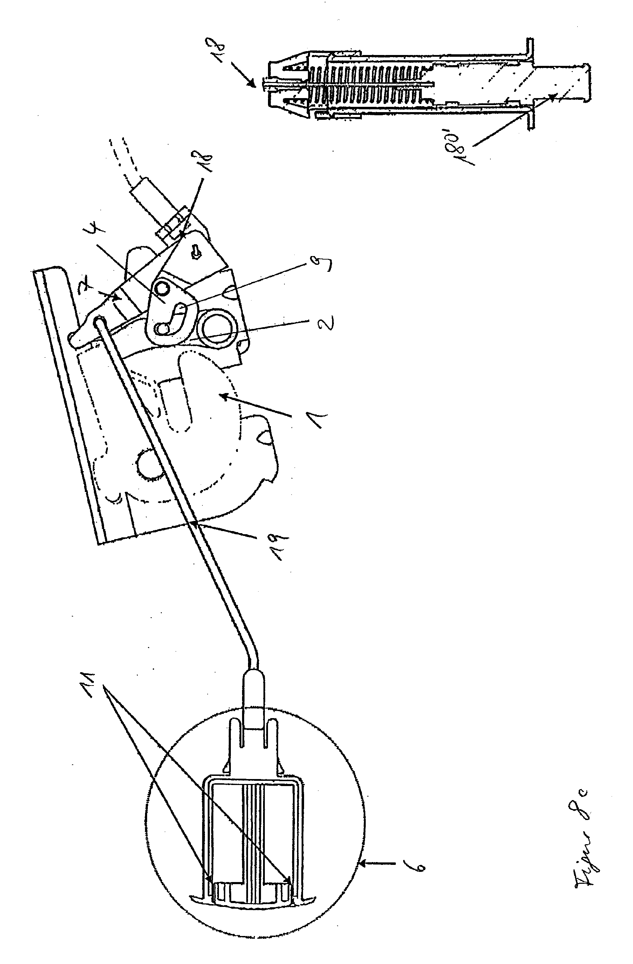

In einer bevorzugten Ausführungsform bewirkt das mechanische Signal SO, SI, dass der Verriegelungshaken zwar von der Entriegelungsposition E in die Verriegelungsposition V gedreht wird, dass jedoch das Betätigungsbauteil 4 nicht gedreht wird, beispielsweise weil die Verriegelungsklinke 2 den Verriegelungshebel 1 nicht sichert. Mittels einem Anzeigemittel 11, siehe **Figur 8****,** kann dem Nutzer eine solche nicht vollständige Verriegelung angezeigt werden. Eine solche nicht vollständige Verriegelung ist beispielsweise eine nicht gesicherte Lehne eines Fahrzeugsitzes.

Das Betätigungsbauteil 4 umfasst das Verstellmittel 9, welches beim Betätigen mittels dem Betätigungsmittel 6 erst nach einer Drehung um einen Sicherheitswinkel mit der Verriegelungsklinke 2 zusammenwirkt. Das Drehen des Verriegelungshakens 1 von der Entriegelungsposition E in die Verriegelungsposition V ist unabhängig vom Verstellen der Verriegelungsklinke 2 von der Freigabeposition F in die Sicherungsposition S möglich, ohne dass der Verriegelungshaken gesichert ist.

Die Darstellungen c und **b** zeigen die Verriegelungsposition V des Verriegelungshakens 1, die beispielsweise als mechanisches Signal SO mittels einem Bowdenkabel 18, siehe **Figur 8****,** einer weiteren Vorrichtung, insbesondere einer weiteren erfindungsgemäßen Vorrichtung, signalisiert werden kann, beispielsweise um die Betätigung der Vorrichtungen zu synchronisieren, so dass die Betätigung gleichzeitig erfolgt.

Die Darstellung a zeigt die Entriegelungsposition E des Verriegelungshakens 1, die beispielsweise einer anderen Vorrichtung angezeigt werden kann, beispielsweise einem Anzeigemittel 11, um dem Nutzer den nicht gesicherten Zustand mitzuteilen.

**Figur 8** zeigt einen Anwendungsfall einer nicht erfindungsgemäßen Vorrichtung mit einem Signalmittel 7. Die Vorrichtung ist eine Lehnenverriegelung eines Fahrzeugsitzes. Das Signalmittel 7 gibt ein mechanisches Signal SO an eine weitere Vorrichtung, hier eine Drehmomentsperre eines Mittellagers des Fahrzeugsitzes, ab, bzw. nimmt ein mechanisches Signal SI von der weiteren Vorrichtung entgegen. Die Vorrichtung weist ein Anzeigemittel 11 auf, um dem Nutzer einen nicht verriegelten Zustand des Lehnenschlosses und/oder der Drehmomentsperre anzuzeigen. Die Begriffe Vorrichtung und Lehnenschloss sowie die Begriffe weitere Vorrichtung und Drehmomentsperre werden im Folgenden jeweils synonym behandelt. Die Darstellungen **a - c** zeigen das Betätigungsmittel 6 nur schematisch.

Darstellung **a** zeigt eine Schnittdarstellung des Lehnenschlosses und der Drehmomentsperre im Mittellager im nicht verriegelten Zustand des Lehnenschlosses und im nicht verriegelten Zustand 180 der Drehmomentsperre. Das Anzeigemittel 11 signalisiert eine nicht sicher verriegelte Rückenlehne.

Darstellung **b** zeigt eine Schnittdarstellung des Lehnenschlosses und der Drehmomentsperre im Mittellager im verriegelten Zustand des Lehnenschlosses und im nicht verriegelten Zustand 180 der Drehmomentsperre. Das Anzeigemittel 11 signalisiert eine nicht sicher verriegelte Rückenlehne.

Darstellung **c** zeigt eine Schnittdarstellung des Lehnenschlosses und der Drehmomentsperre im Mittellager im verriegelten Zustand des Lehnenschlosses und im verriegelten Zustand der Drehmomentsperre 180'. Das Anzeigemittel 11 signalisiert eine sicher verriegelte Rückenlehne.

Um den Verriegelungszustand der Drehmomentsperre mittels dem Anzeigemittel 11 des Lehnenschlosses anzeigen zu können, nimmt das Signalmittel 7 des Lehnenschlosses den Verriegelungszustand der Drehmomentsperre als mechanisches Signal SI entgegen. Es wird mittels einem biegesteifen Bowdenkabel 18, das am Signalmittel 7 angeordnet ist, übertragen. Außerdem ist das Signalmittel 7 mittels einer Verbindungsstange 19 mit dem Anzeigemittel 11 verbunden.

Wird die Drehmomentsperre beispielsweise durch Verschmutzung oder andere Umstände nicht sicher im Mittellager verriegelt, obwohl das Lehnenschloss verriegelt ist, so verhindert das biegesteife Bowdenkabel 18, dass das Signalmittel 7 gedreht wird, bzw. dass die Verriegelungsklinke 2 von der Freigabeposition F in die Sicherungsposition S gedreht wird. Aufgrund der Verbindungsstange 19 wird am Anzeigemittel 11 angezeigt, dass die Lehne nicht vollständig verriegelt ist.

Auch wenn das Lehnenschloss nicht vollständig verriegelt ist, beispielsweise wenn die Verriegelungsklinke 2 nicht in die Sicherungsposition S gedreht ist, wird am Anzeigemittel 11 unabhängig vom Verriegelungszustand der Drehmomentsperre eine nicht sicher verriegelte Vorrichtung angezeigt, da das Signalmittel 7 aufgrund des Verstellmittels 9 am Betätigungsmittel 4 nicht zurückgestellt wird.

Durch das Anzeigemittel 11 beziehungsweise die Möglichkeit, mechanische Signale SO, SI an weitere Vorrichtungen abzugeben oder entgegen zu nehmen, ist eine sehr sichere Bedienung der erfindungsgemäßen Vorrichtung durch den Nutzer möglich.

### Bezugszeichenliste:

- 1: Verriegelungshaken
- 2: Verriegelungsklinke
- 20: Kontur der Verriegelungsklinke
- 21: Nocken der Verriegelungsklinke
- 3: Grundplatte
- 33: Endanschlag
- 130: Prägung
- 4: Betätigungsbauteil
- 41: Ausnehmung des Betätigungsbauteils
- 5: Kraftmittel, beispielsweise (Zug-) Feder
- 51: Erstes Ende des Kraftmittels
- 52: Zweites Ende des Kraftmittels
- 6: Betätigungsmittel
- 61: Betätigungsvorrichtung
- 7: Signalmittel
- 71: Anformung des Signalmittels
- 8: Verriegelungsbolzen
- 9: Verstellmittel, beispielsweise Kulisse
- 10: Schiebeelement
- 101: Aufnahmebauteil
- 102: Halteblech
- 103: Vorsprung
- 104: Ausnehmung
- 105: Verbindungsprägung
- 106: Befestigungspunkt
- 107: Kunststoffbauteil
- 108: Klemmlasche
- 11: Anzeigemittel
- 12: Einbuchtungen und/oder Ausbuchtungen
- 13: Erster Anschlag des Verriegelungshakens
- 14: Zweiter Anschlag des Verriegelungshakens
- 15: Breite der Vorrichtung
- 16: Zweites Kraftmittel des Schiebeelementes
- 17: Hakenmaul
- 18: Biegesteifes Bowdenkabel
- 180, 180': Nicht verriegelter/verriegelter Verriegelungszustand Drehmomentsperre
- 19: Verbindungsstange
- V: Verriegelungsposition des Verriegelungshakens
- E: Entriegelungsposition des Verriegelungshakens
- S: Sicherungsposition der Verriegelungsklinke
- F: Freigabeposition der Verriegelungsklinke
- F1: Kraft auf den Verriegelungshaken beim Verriegeln
- F2: Rückwirkende Verformungskraft
- D1: Spaltmaß zwischen der Verriegelungsklinke und dem -haken beim Verriegeln
- D2: Spaltmaß in der Verriegelunsposition

## Patentansprüche

1. Vorrichtung zur Verriegelung und Entriegelung eines Verriegelungsbolzens (8) einer Komponente, insbesondere einer Lehne eines Kraftfahrzeugsitzes, mit einem Verriegelungshaken (1) und einem Betätigungsbauteil (4), wobei der Verriegelungshaken (1) in einer die Verriegelung sichernden Verriegelungsposition (V) kraft- und/oder formschlüssig mit dem Verriegelungsbolzen (8) zusammenwirkt und durch Drehen des Betätigungsbauteils (4) in eine die Verriegelung nicht sichernde Entriegelungsposition (E) drehbar ist, wobei die Vorrichtung eine Verriegelungsklinke (2) aufweist, die von einer Freigabeposition (F) in eine Sicherungsposition (S) reversibel verstellbar ist, und die in ihrer Sicherungsposition (S) den Verriegelungshaken (1) in seiner Verriegelungsposition (V) sichert, **dadurch gekennzeichnet, dass** das Betätigungsbauteil (4) massenausgeglichen ist und ein Verstellmittel (9) umfasst, welches erst nach einer Drehung des Betätigungsbauteils (4) um einen Sicherheitswinkel die Verriegelungsklinke (2) freigibt.

2. Vorrichtung nach Anspruch 1, **dadurch gekennzeichnet, dass** das Betätigungsbauteil (4) über ein Kraftmittel (5) mit dem Verriegelungshaken (1) zusammenwirkt.

3. Vorrichtung nach Anspruch 1, **dadurch gekennzeichnet, dass** die Vorrichtung ein Schiebeelement (10) umfasst, mit dem das Spiel zwischen dem Verriegelungsbolzen (8) und dem Verriegelungshaken (1) in der Verriegelungsposition (V) reduzierbar ist, wobei das Schiebeelement (10) ein zweites Kraftmittel (16) umfasst, mittels dessen Kraft es in der Verriegelungsposition (V) des Verriegelungshakens (1) mit dem Verriegelungsbolzen (8) zusammenwirkt, wobei die Kraft des zweiten Kraftmittels (16) im wesentlichen unabhängig von der Umgebungstemperatur ist und wobei das zweite Kraftmittel (16) aus zwei parallel geschalteten Druckfedern oder aus einem gewellten Federblech besteht.

4. Kraftfahrzeugsitz, **dadurch gekennzeichnet, dass** er eine Vorrichtung nach einem der vorherigen Ansprüche aufweist.

## Claims

1. Device for locking and unlocking a locking pin (8) of a component, especially of a back rest of a motor vehicle seat, with a locking hook (1) and an actuating component (4), wherein the locking hook (1) cooperates non-positively and/or positively with the locking pin (8) in a locked position (V) securing the locking, and by rotating the actuating component (4), can be rotated into an unlocked position (E) not securing the locking, wherein the device has a locking pawl (2) which can be reversibly adjusted from a release position (F) into a secured position (S) and which, in the secured position (S) thereof, secures the locking hook (1) in the locked position (V) thereof, **characterized in that** the actuating component (4) is compensated for in terms of mass and comprises an adjustment means (9) which releases the locking pawl (2) only after the actuating component (4) has rotated by a safety angle.

2. Device according to Claim 1, **characterized in that** the actuating component (4) cooperates with the locking hook (1) via a force means (5).

3. Device according to Claim 1, **characterized in that** the device comprises a sliding element (10) by means of which the clearance between the locking pin (8) and the locking hook (1) can be reduced in the locked position (V), wherein the sliding element (10) comprises a second force means (16) by means of which the force thereof said sliding element cooperates in the locked position (V) of the locking hook (1) with the locking pin (8), wherein the force of the second force means (16) is substantially independent of the ambient temperature, and wherein the second force means (16) consists of two compression springs connected in parallel or of a corrugated spring steel sheet.

4. Motor vehicle seat, **characterized in that** it comprises a device according to one of the preceding claims.

## Revendications

1. Dispositif de verrouillage et de déverrouillage d'un boulon de verrouillage (8) d'un composant, en particulier d'un dossier d'un siège de véhicule automobile, comprenant un crochet de verrouillage (1) et un composant d'actionnement (4), le crochet de verrouillage (1), dans une position de verrouillage (V) fixant le verrouillage, coopérant par engagement par force et/ou par correspondance géométrique avec le boulon de verrouillage (8) et, par rotation du composant d'actionnement (4), pouvant tourner dans une position de déverrouillage (E) ne fixant pas le verrouillage, le dispositif présentant un cliquet de verrouillage (2) qui peut être déplacé de manière réversible d'une position de libération (F) dans une position de fixation (S), et qui, dans sa position de fixation (S), fixe le crochet de verrouillage (1) dans sa position de verrouillage (V), **caractérisé en ce que** le composant d'actionnement (4) est équilibré en masse et comprend un moyen de déplacement (9) qui ne libère le cliquet de verrouillage (2) qu'après une rotation du composant d'actionnement (4) autour d'un angle de sécurité.

2. Dispositif selon la revendication 1, **caractérisé en ce que** le composant d'actionnement (4) coopère avec le crochet de verrouillage (1) par le biais d'un moyen de force (5).

3. Dispositif selon la revendication 1, **caractérisé en ce que** le dispositif comprend un élément coulissant (10) avec lequel le jeu entre le boulon de verrouillage (8) et le crochet de verrouillage (1) dans la position de verrouillage (V) peut être réduit, l'élément coulissant (10) comprenant un deuxième moyen de force (16) au moyen de la force duquel il coopère avec le boulon de verrouillage (8) dans la position de verrouillage (V) du crochet de verrouillage (1), la force du deuxième moyen de force (16) étant essentiellement indépendante de la température environnante et le deuxième moyen de force (16) se composant de deux ressorts de compression montés en parallèle ou d'une tôle à ressort ondulée.

4. Siège de véhicule automobile, **caractérisé en ce qu'**il présente un dispositif selon l'une quelconque des revendications précédentes.
